# EUROPEAN PATENT SPECIFICATION

(11) **EP 4 328 669 B1**
(45) Date of publication and mention of the grant of the patent: **05.11.2025**
(21) Application number: 22796106.7
(22) Date of filing: 26.04.2022
(51) Int. Cl.: G03B 3/00, G03B 17/12, G03B 30/00, G02B 7/08, G03B 3/10, G03B 5/00, H04N 23/52, H04N 23/54

(54) **CAMERA MODULE AND ELECTRONIC APPARATUS INCLUDING SAME**
KAMERAMODUL UND ELEKTRONISCHE VORRICHTUNG DAMIT
MODULE DE CAMÉRA ET APPAREIL ÉLECTRONIQUE LE COMPRENANT

(30) Priority: 28.04.2021 KR 20210054980
(43) Date of publication of application: 28.02.2024
(73) Proprietor: Samsung Electronics Co., Ltd., Suwon-si, Gyeonggi-do 16677 (KR)
(72) Inventor: HUR, Dongsung, Suwon-si, Gyeonggi-do 16677 (KR); HWANG, Youngjae, Suwon-si, Gyeonggi-do 16677 (KR); YU, Hyunho, Suwon-si, Gyeonggi-do 16677 (KR); YU, Youngbok, Suwon-si, Gyeonggi-do 16677 (KR)
(74) Representative: Nederlandsch Octrooibureau
(86) International application number: PCT/KR2022/005955
(87) International publication number: WO 2022/231273

(56) References cited:
- JP-B2- 5 639 161
- KR-A- 20190 133 877
- KR-A- 20210 014 875
- KR-A- 20210 030 724
- US-A1- 2008 117 533
- US-A1- 2019 041 601
- US-A1- 2019 103 799

## Description

### Technical Field

Embodiments relate to a camera module and an electronic apparatus including the same.

### Background Art

An electronic apparatus includes at least one camera module. Functions required for the camera module are being gradually diversified, whereas an available space for the camera module is being gradually decreased, and miniaturization of the camera module is required.

Such a miniaturized camera module may use, as a driving module for driving a lens assembly, a voice coil motor (VCM) type driving module using an interaction between a coil and a magnet.

An operating method of the VCM type driving module may be largely divided into two types, i.e., a solenoid type and a Lorentz type.

First, in a solenoid type driving module, a distance between a coil and a magnet is decreased or increased depending on a direction of a current applied to the coil, and at this time, a lens assembly on which the coil or magnet is mounted is moved. The solenoid type driving module may be used for an image stabilization function.

Next, in a Lorentz type driving module, a magnet and a coil move in parallel with each other while a distance between the coil and the magnet is uniformly maintained. In such a Lorentz type driving module, the coil or the magnet is moved in parallel by a Lorentz force. The Lorentz type driving module may be used for a zoom-in/zoom-out function or an auto focus function.

In the Lorentz type driving module, the number of magnets and the number of coils may be increased to increase a moving distance of a lens assembly, i.e., a stroke distance. However, when the number of magnets and the number of coils are increased as such, not only is the number of components of the driving module increased, but also a control operation may become complicated. US 2019/041601 A1 relates to lens assemblies and actuators for use in combination with imaging sensors, and more particularly relates to lens assemblies and actuators for providing optical zoom in devices such as cameras integrated into cellular phones, security cameras, and other small form factor imaging devices, particularly those which benefit from a small Z dimension.

### Disclosure

### Technical Problem

Embodiments are for providing a camera module in which an increase in the number of components of a driving module is minimized and control of a lens assembly is simplified, and an electronic apparatus including the camera module.

### Technical Solution

A camera module according to an embodiment includes at least one lens assembly, a moving frame mounted with the at least one lens assembly, moving the at least one lens assembly in an optical axis direction, and including a magnet having an N pole and an S pole arranged in a first direction perpendicular to the optical axis direction, and a fixed frame supporting the moving frame to be movable in the optical axis direction, and including a coil and a magnetic field blocking unit, the coil being spaced apart from the magnet in the first direction and the magnetic field blocking unit being arranged at a center portion of the coil and extending in the optical axis direction, wherein the coil includes a first region provided between the magnetic field blocking unit and the magnet, and a second region provided to face the first region with the magnetic field blocking unit therebetween, and a moving direction of the moving frame varies according to a direction of a current applied to the first region of the coil.

A magnitude of a first force applied to the magnet by a current flowing through the first region may be greater than a magnitude of a second force applied to the magnet by a current flowing through the second region.

A height of the coil in the optical axis direction may be greater than a height of the magnet in the optical axis direction.

The height of the coil in the optical axis direction may be equal to or greater than a sum of a movable distance of the moving frame in the optical axis direction and the height of the magnet in the optical axis direction.

A height of the magnetic field blocking unit in the optical axis direction may be greater than a height of the coil in the optical axis direction.

The magnetic field blocking unit may include a first magnetic field blocking region provided between the first region and the second region, and extending in the optical axis direction, and a second magnetic field blocking region parallel to the first magnetic field blocking region and arranged such that the first region and the magnet are located between the first magnetic field blocking region and the second magnetic field blocking region.

The magnetic field blocking unit may further include a third blocking region connecting the first magnetic field blocking region and the second magnetic field blocking region to each other.

The camera module may further include a position sensor configured to detect position movement of the moving frame, wherein the magnet may include an extending portion extended to face the position sensor, and the position sensor may be configured to detect movement of the moving frame by detecting movement of the extending portion.

A width of the magnet in a second direction perpendicular to both the optical axis direction and the first direction may be greater than a width of the coil in the second direction.

There may be a plurality of position sensors, and the plurality of position sensors may be arranged in the optical axis direction.

The coil may include a first sub-coil and a second sub-coil, which are arranged in the optical axis direction.

The at least one lens assembly may include a first lens assembly and a second lens assembly, the moving frame may include a first moving frame and a second moving frame, the first moving frame being mounted with the first lens assembly and movable in the optical axis direction, and the second moving frame being mounted with the second lens assembly spaced apart from the first lens assembly in the optical axis direction and movable in the optical axis direction, and the magnet may include a first magnet arranged in the first moving frame and a second magnet arranged in the second moving frame.

The fixed frame may include a first coil arranged to face the first magnet and a second coil arranged to face the second magnet, and the magnetic field blocking unit may include a first magnetic field blocking unit arranged at a center portion of the first coil and a second magnetic field blocking unit arranged at a center portion of the second coil.

The first coil and the second coil may be arranged to partially overlap each other in the first direction perpendicular to the optical axis direction.

An electronic apparatus according to an embodiment includes the camera module described above.

### Advantageous Effects

According to a camera module and an electronic apparatus including the same, according to embodiments described above, a long stroke may be realized, an increase in the number of components of a driving module may be minimized, and control of a lens assembly may be simplified.

### Description of Drawings

FIG. 1 is a block diagram of an electronic apparatus in a network environment, according to various embodiments.
FIG. 2 is a block diagram illustrating a camera module according to various embodiments.
FIG. 3 is an exploded perspective view of a camera module according to an embodiment.
FIG. 4 is an assembled perspective view of a camera module according to an embodiment.
FIG. 5 is a diagram showing an example of a cross section of a camera module, according to an embodiment.
FIG. 6 is a diagram for describing examples of a magnet and a coil of a driving module, according to an embodiment.
FIG. 7 is a diagram for describing an operation of a driving module, according to an embodiment.
FIG. 8 is a diagram for describing an operation of a camera module, according to a comparative example.
FIG. 9 is a diagram for describing an operation of a driving module, according to an embodiment.
FIGS. 10 to 12 are diagrams for describing magnetic field blocking units according to different embodiments.
FIG. 13 is a partial perspective view of a driving module of a camera module, according to an embodiment.
FIG. 14 is a diagram for describing a magnet, a coil, and a position sensor, according to an embodiment.
FIG. 15 is a diagram for describing a magnet, a coil, and a position sensor, according to another embodiment.
FIG. 16 is a diagram for describing an operation of a camera module, according to an embodiment.

### Mode for Invention

Hereinafter, embodiments according to the present disclosure will be described in detail with reference to content shown in accompanying drawings. Also, a camera module according to an embodiment of the present disclosure and an electronic apparatus including the same will be described in detail with reference to the content shown in the accompanying drawings. Like reference numerals or signs in the drawings denote parts or components substantially performing same functions.

While the terms including ordinal numbers, such as "first", "second", etc., may be used to describe various components, such components are not limited to the above terms. The above terms are used only to distinguish one component from another. For example, without departing from the scope of the rights described in the present disclosure, a first component may be referred to as a second component, and similarly, a second component may be referred to as a first component. The term "and/or" includes a combination of a plurality of related items or one item from among the plurality of related items.

Also, the terms used in the present specification are only used to describe embodiments, and are not intended to limit and/or restrict the present disclosure. An expression used in the singular encompasses the expression in the plural, unless it has a clearly different meaning in the context. In the present specification, it is to be understood that terms such as "including" or "having", etc., are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added. Like reference numerals in the drawings denote elements substantially performing same functions.

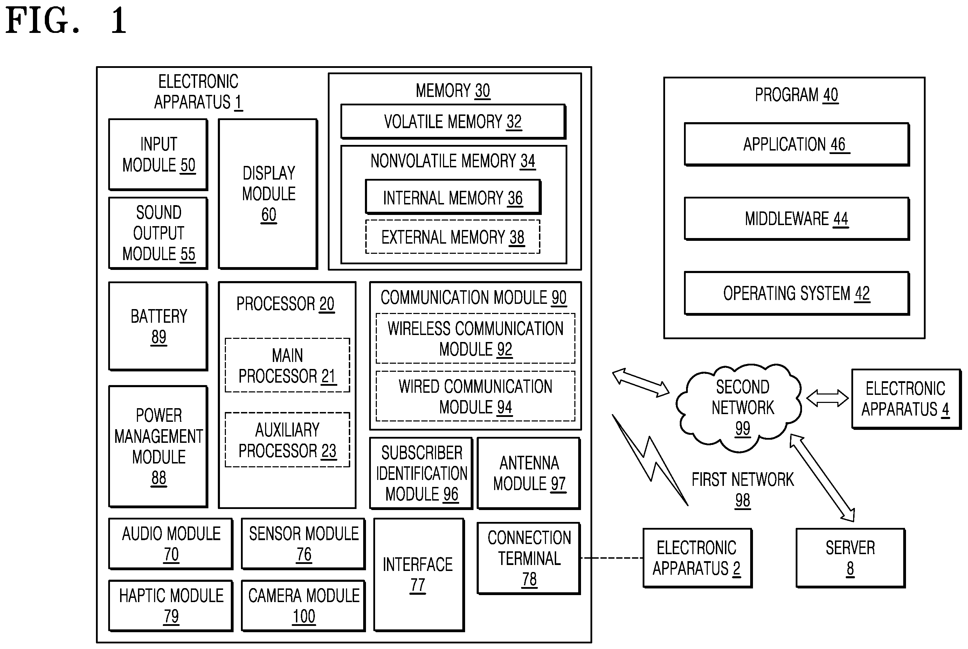

FIG. 1 is a block diagram of an electronic apparatus 1 in a network environment N, according to various embodiments. Referring to FIG. 1, in the network environment N, the electronic apparatus 1 may communicate with an electronic apparatus 2 through a first network 98 (e.g., a short-range wireless communication network) or communicate with at least one of an electronic apparatus 4 or a server 8 through a second network 99 (e.g., a long-range wireless communication network). According to an embodiment, the electronic apparatus 1 may communicate with the electronic apparatus 4 through the server 8. According to an embodiment, the electronic apparatus 1 may include a processor 20, a memory 30, an input module 50, a sound output module 55, a display module 60, an audio module 70, a sensor module 76, an interface 77, a connection terminal 78, a haptic module 79, a power management module 88, a battery 89, a communication module 90, a subscriber identification module 96, an antenna module 97, and a camera module 100. According to some embodiments, at least one (e.g., the connection terminal 78) of the components may be omitted from or one or more other components may be added to the electronic apparatus 1. According to some embodiments, some (e.g., the sensor module 76, the camera module 100, or the antenna module 97) of the components may be integrated into one component (e.g., the display module 60).

The processor 20 may, for example, control at least one component (e.g., a hardware or software component) of the electronic apparatus 1 connected to the processor 20 by executing software (e.g., a program 40), and may perform various data processes or operations. According to an embodiment, as at least a part of the data processes or operations, the processor 20 may store, in a volatile memory 32, a command or data received from another component (e.g., the sensor module 76 or communication module 90), process the command or data stored in the volatile memory 32, and store result data in a nonvolatile memory 34. According to an embodiment, the processor 20 may include a main processor 21 (e.g., a central processing unit or an application processor) or an auxiliary processor 23 (e.g., a graphics processing unit, neural processing unit (NPU), image signal processor, sensor sub processor, or communication processor) that is operable independently from or together with the main processor 21. For example, when the electronic apparatus 1 includes the main processor 21 and the auxiliary processor 23, the auxiliary processor 23 may be configured to use lower power than the main processor 21 or be specialized for a designated function. The auxiliary processor 23 may be implemented separately from or as a part of the main processor 21.

The auxiliary processor 23 may, for example, control at least some of functions or states related to at least one component (e.g., the display module 60, the sensor module 76, or the communication module 90) from among the components of the electronic apparatus 1, instead of the main processor 21 when the main processor 21 is in an inactive (e.g., sleep) state, or together with the main processor 21 when the main processor 21 is in an active (e.g., application execution) state. According to an embodiment, the auxiliary processor 23 (e.g., the image signal processor or communication processor) may be implemented as a part of a functionally related component (e.g., the camera module 100 or communication module 90). According to an embodiment, the auxiliary processor 23 (e.g., the NPU) may include a hardware structure specialized for processing of an artificial intelligence model. The artificial intelligence model may be generated through machine learning. Such learning may be, for example, performed by the electronic apparatus 1 itself where the artificial intelligence model is performed, or through a separate server (e.g., the server 8). Examples of a learning algorithm may include supervised learning, unsupervised learning, semi-supervised learning, and reinforcement learning, but are not limited thereto. The artificial intelligence model may include a plurality of artificial neural network layers. An artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination thereof, but is not limited thereto. The artificial intelligence model may include, additionally or alternatively, a software structure, in addition to a hardware structure.

The memory 30 may store various types of data used by at least one component (e.g., the processor 20 or sensor module 76) of the electronic apparatus 1. The data may include, for example, software (e.g., the program 40), and input data or output data regarding a command related thereto. The memory 30 may include the volatile memory 32 or the nonvolatile memory 34.

The program 40 may be stored in the memory 30 as software, and may include, for example, an operating system 42, middleware 44, or an application 46.

The input module 50 may receive a command or data to be used in a component (e.g., the processor 20) of the electronic apparatus 1 from the outside (e.g., a user) of the electronic apparatus 1. The input module 50 may include, for example, a microphone, a mouse, a keyboard, a key (e.g., a button), or a digital pen (e.g., a stylus pen).

The sound output module 55 may output a sound signal to the outside of the electronic apparatus 1. The sound output module 55 may include, for example, a speaker or a receiver. The speaker may be used for a general purpose, such as multimedia reproduction or recording reproduction. The receiver may be used to receive an incoming call. According to an embodiment, the receiver may be implemented separately from or as a part of the speaker.

The display module 60 may visually provide information to the outside (e.g., the user) of the electronic apparatus 1. The display module 60 may include, for example, a display, a hologram device, or a projector, and a control circuit for controlling a corresponding device. According to an embodiment, the display module 60 may include a touch sensor configured to detect a touch, or a pressure sensor configured to measure strength of power generated by the touch.

The audio module 70 may convert sound into an electric signal or convert an electric signal into sound. According to an embodiment, the audio module 70 may acquire sound through the input module 50 or output sound through the sound output module 55 or an external electronic apparatus (e.g., the electronic apparatus 2 (e.g., a speaker or headphone)) connected to the electronic apparatus 1 directly or wirelessly.

The sensor module 76 may detect an operating state (e.g., power or temperature) of the electronic apparatus 1 or an external environment state (e.g., a user state), and generate an electric signal or data value corresponding to the detected state. According to an embodiment, the sensor module 76 may include, for example, a gesture sensor, a gyro-sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illumination sensor.

The interface 77 may support one or more designated protocols that may be used by the electronic apparatus 1 to be connected to an external electronic apparatus (e.g., the electronic apparatus 2) directly or wirelessly. According to an embodiment, the interface 77 may include, for example, a high-definition multimedia interface (HDMI), a universal serial bus (USB) interface, a secure digital (SD) card interface, or an audio interface.

The connection terminal 78 may include a connector enabling the electronic apparatus 1 to be physically connected to an external electronic apparatus (e.g., the electronic apparatus 2) therethrough. According to an embodiment, the connection terminal 78 may include, for example, an HDMI connector, a USB connector, an SD card connector, or an audio connector (e.g., a headphone connector).

The haptic module 79 may convert an electric signal into a mechanical stimulus (e.g., vibration or motion) or an electric stimulus, which may be recognized by a user through tactile or exercise sense. According to an embodiment, the haptic module 79 may include, for example, a motor, a piezoelectric device, or an electric stimulus device.

The power management module 88 may manage power supplied to the electronic apparatus 1. According to an embodiment, the power management module 88 may be implemented as, for example, at least a part of a power management integrated circuit (PMIC).

The battery 89 may supply power to at least one component of the electronic apparatus 1. According to an embodiment, the battery 89 may include, for example, a primary battery that is unable to be recharged, a rechargeable secondary battery, or a fuel cell.

The communication module 90 may support establishment of a direct (e.g., wired) communication channel or a wireless communication channel between the electronic apparatus 1 and another electronic apparatus (e.g., the electronic apparatus 2, the electronic apparatus 4, or the server 8), and performing of communication through an established communication channel. The communication module 90 is operated independently from the processor 20 (e.g., the application processor), and may include one or more communication processors supporting direct (e.g., wired) communication or wireless communication. According to an embodiment, the communication module 90 may include a wireless communication module 92 (e.g., a cellular communication module, a short-range wireless communication module, or a global navigation satellite system (GNSS) communication module), or a wired communication module 94 (e.g., a local area network (LAN) communication module or a power line communication module). A corresponding communication module among such communication modules may communicate with the external electronic apparatus 4 through the first network 98 (e.g., the short-range wireless communication network, such as Bluetooth, wireless fidelity (WiFi) direct, or infrared data association (IrDA)) or the second network 99 (e.g., a long-range communication network, such as a legacy cellular network, 5G network, next-generation communication network, the Internet, or computer network (e.g., an LAN or a wide area network (WAN))). Such various types of communication modules may be integrated into one component (e.g., a single chip) or implemented as a plurality of separate components (e.g., a plurality of chips). The wireless communication module 92 may identify or authenticate the electronic apparatus 1 in a communication network, such as the first network 98 or second network 99, by using subscriber information (e.g., an international mobile subscriber identifier (IMSI)) stored in the subscriber identification module 96.

The wireless communication module 92 may support a 5G network beyond 4G network, and next-generation communication technology, for example, new radio (NR) access technology. The NR access technology may support enhanced mobile broadband (eMBB), massive machine type communication (mMTC), or ultra-reliability and low-latency communication (URLLC). The wireless communication module 92 may support, for example, a high-frequency band (e.g., mmWave band) to achieve a high data rate. The wireless communication module 92 may support various technologies for securing performance in a high-frequency band, for example, technologies such as beamforming, massive multiple-input and multiple-output (MIMO), full dimensional MIMO (FD-MIMO), array antenna, analog beamforming, and large scale antenna. The wireless communication module 92 may support various requirements specified by the electronic apparatus 1, an external electronic apparatus (e.g., the electronic apparatus 4), or a network system (e.g., the second network 99). According to an embodiment, the wireless communication module 92 may support a peak data rate (e.g., 20 Gbps or greater) for eMBB realization, loss coverage (e.g., 164 dB or less) for mMTC realization, or U-plane latency (e.g., 0.5 ms or less for each downlink (DL) and uplink (UL) or 1 ms or less of round trip) for URLLC realization.

The antenna module 97 may transmit or receive a signal or power to or from the outside (e.g., an external electronic apparatus). According to an embodiment, the antenna module 97 may include an antenna including an emitter consisting of a conductor or conductive pattern formed on a substrate (e.g., a printed circuit board (PCB)). According to an embodiment, the antenna module 97 may include a plurality of antennas (e.g., an array antenna). In this case, at least one antenna suitable to a communication method used in a communication network, such as the first network 98 or second network 99, may be selected from the plurality of antennas by, for example, the communication module 90. The signal or power may be transmitted or received between the communication module 90 and an external electronic apparatus through the at least one selected antenna. According to some embodiments, a component (e.g., a radio frequency integrated circuit (RFIC)) other than the emitter may be additionally provided as a part of the antenna module 97.

According to various embodiments, the antenna module 97 may form an mmWave antenna module. According to an embodiment, the mmWave antenna module may include a printed circuit board, an RFIC capable of supporting a designated high-frequency band (e.g., an mmWave band) and arranged on or adjacent to a first surface (e.g., a bottom surface) of the printed circuit board, and a plurality of antennas (e.g., an array antenna) capable of transmitting or receiving a signal of the designated high-frequency band and arranged on or adjacent to a second surface (e.g., a top surface) of the printed circuit board.

At least some of the components may be connected to each other through a communication method between peripheral devices (e.g., a bus, a general purpose input and output (GPIO), a serial peripheral interface (SPI), or a mobile industry processor interface (MIPI)), and may exchange signals (e.g., a command or data).

According to an embodiment, the command or data may be transmitted or received between the electronic apparatus 1 and the external electronic apparatus 4, through the server 8 connected to the second network 99. Each external electronic apparatus 2 or 4 may be a same or different type of device as or from the electronic apparatus 1. According to an embodiment, all or some of operations executed by the electronic apparatus 1 may be executed by one or more external electronic apparatuses from among the external electronic apparatuses 2, 4, or 8. For example, when the electronic apparatus 1 is to perform a certain function or service automatically or in response to a request from a user or another device, the electronic apparatus 1 may request one or more external electronic apparatuses to perform at least a part of the function or service, instead of or in addition to performing the function or service by itself. Upon receiving the request, the one or more external electronic apparatuses may execute at least a part of the requested function or service or an additional function or service related to the request, and transmit a result thereof to the electronic apparatus 1. The electronic apparatus 1 may process the result as it is or additionally, and provide the result as at least a part of a response to the request. In this regard, for example, cloud computing, distributed computing, mobile edge computing (MEC), or client-server computing technology may be used. The electronic apparatus 1 may provide an ultra-low latency service by using, for example, the distributed computing or mobile edge computing. According to another embodiment, the external electronic apparatus 4 may include an Internet of things (IoT) device. The server 8 may be an intelligent server using machine learning and/or neural network. According to an embodiment, the external electronic apparatus 4 or server 8 may be included in the second network 99. The electronic apparatus 1 may be applied to an intelligence service (e.g., a smart home, a smart city, a smart car, or health care), based on 5G communication technology and loT-related technology.

The camera module 100 may capture a still image and a moving image. According to an embodiment, the camera module 100 may include one or more lenses, image sensors, image signal processors, or flashes. According to an embodiment, the electronic apparatus 1 may include a plurality of camera modules 100 having different attributes or functions. In this case, for example, at least one of the plurality of camera modules 100 may be a wide-angle camera and at least one thereof may be a telephoto camera. Similarly, at least one of the plurality of camera modules 100 may be a front camera and at least one thereof may be a rear camera.

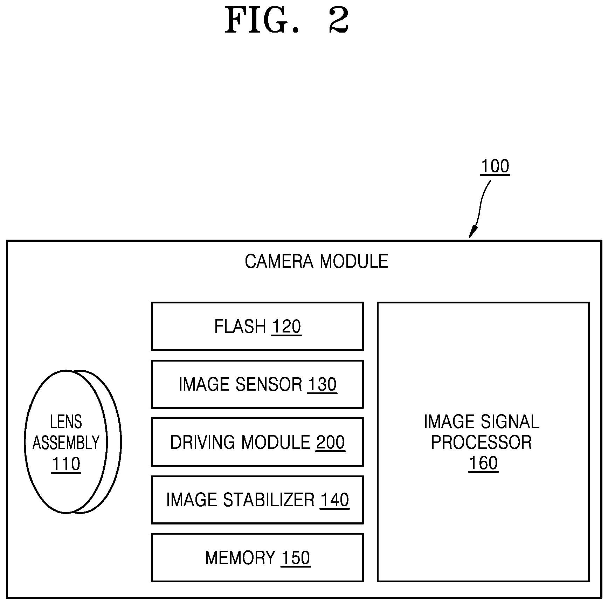

FIG. 2 is a block diagram illustrating the camera module 100 according to various embodiments. Referring to FIG. 2, the camera module 100 may include a lens assembly 110, a flash 120, an image sensor 130, an image stabilizer 140, a memory 150 (e.g., a buffer memory), an image signal processor 160, or a driving module 200.

The lens assembly 110 may collect light emitted from a subject that is a target of image capturing. The lens assembly 110 may include one or more lenses. According to an embodiment, the camera module 100 may include a plurality of the lens assemblies 110. In this case, the camera module 100 may configure, for example, a dual camera, a 360° camera, or a spherical camera. Some of the plurality of lens assemblies 110 may have a same lens attribute (e.g., a viewing angle, a focal length, an auto-focus, an f number, or an optical zoom), or at least one lens assembly may have one or more lens attributes different from lens attributes of another lens assembly. The lens assembly 110 may include, for example, a wide-angle lens or a telephoto lens.

The driving module 200 may move the lens assembly 110 in an optical axis direction and a direction perpendicular to the optical axis direction. For example, the driving module 200 may be configured to move the lens assembly 110 forward or backward in the optical axis direction. Accordingly, the camera module 100 may perform a zoom-in/zoom-out function or an auto focus function. As another example, the driving module 200 may be configured to move the lens assembly 110 in a direction perpendicular to an optical axis. Accordingly, the camera module 100 may perform an image stabilization function.

The flash 120 may emit light used to reinforce light emitted or reflected from a subject. According to an embodiment, the flash 120 may include one or more light-emitting diodes (e.g., red-green-blue (RGB) LED, white LED, infrared LED, or ultraviolet LED) or a xenon lamp.

The image sensor 130 may acquire an image corresponding to the subject by converting light transmitted through the lens assembly 110 by being emitted or reflected from the subject, into an electric signal. According to an embodiment, the image sensor 130 may include one image sensor selected from among image sensors having different attributes, such as an RGB sensor, a black and white (BW) sensor, an IR sensor, and a UV sensor, a plurality of image sensors having a same attribute, or a plurality of image sensors having different attributes. Each image sensor included in the image sensor 130 may be implemented by using, for example, a charged coupled device (CCD) sensor or a complementary metal oxide semiconductor (CMOS) sensor.

The image stabilizer 140 may move the image sensor 130 or at least one lens included in the lens assembly 110 in a specific direction or control (e.g., adjust a read-out timing) an operation characteristic of the image sensor 130, in response to movement of the camera module 100 or the electronic apparatus 1 including the same. Accordingly, an adverse effect on a captured image, the adverse effect being caused by the movement, may be at least partially compensated for. According to an embodiment, the image stabilizer 140 may detect the movement of the camera module 100 or electronic apparatus 1 by using a gyro sensor (not shown) or acceleration sensor (not shown) arranged inside or outside the camera module 100. According to an embodiment, the image stabilizer 140 may be realized as, for example, an optical image stabilizer. The memory 150 may at least temporarily store at least a portion of an image acquired through the image sensor 130, for a next image process. For example, when image acquisition according to a shutter is delayed or a plurality of images are obtained at a high speed, an acquired original image (e.g., a Bayer-patterned image or high-resolution image) may be stored in the memory 150 and a duplicate image (e.g., a low-resolution image) corresponding to the original image may be previewed through the display module 60. Then, when a designated condition is satisfied (e.g., a user input or a system command), at least a portion of the original image stored in the memory 150 may be acquired and processed by, for example, the image signal processor 160. According to an embodiment, the memory 150 may be configured as at least a portion of the memory 30 or as a separate memory operated independently from the memory 30.

The image signal processor 160 may perform one or more image processes on an image acquired through the image sensor 130 or an image stored in the memory 150. The one or more image processes may include, for example, depth map generation, 3D modeling, panorama generation, feature point extraction, image synthesis, or image correction (e.g., noise reduction, resolution adjustment, brightness adjustment, burring, sharpening, or softening). Additionally or alternatively, the image signal processor 160 may perform control (e.g., exposure time control or read-out timing control) on at least one component (e.g., the image sensor 130) from among components included in the camera module 100. The image processed by the image signal processor 160 may be stored in the memory 150 again or provided to an external component (e.g., the memory 30, the display module 60, the electronic apparatus 2, the electronic apparatus 4, or the server 8) of the camera module 100, for an additional process. According to an embodiment, the image signal processor 160 may be configured as at least a portion of the processor 20 or as a separate processor operated independently from the processor 20. When the image signal processor 160 is configured as a processor separate from the processor 20, at least one image processed by the image signal processor 160 may be displayed through the display module 60 as it is or after an additional image process by the processor 20.

According to an embodiment, the electronic apparatus 1 may include the plurality of camera modules 100 having different attributes or functions. In this case, for example, at least one of the plurality of camera modules 100 may be a wide-angle camera and at least one thereof may be a telephoto camera. Similarly, at least one of the plurality of camera modules 100 may be a front camera and at least one thereof may be a rear camera.

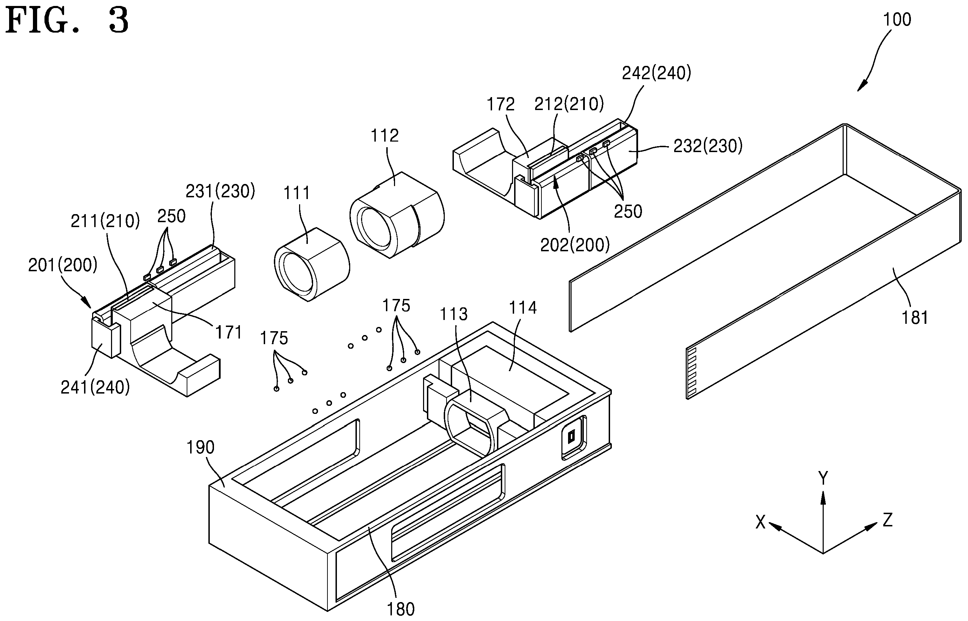

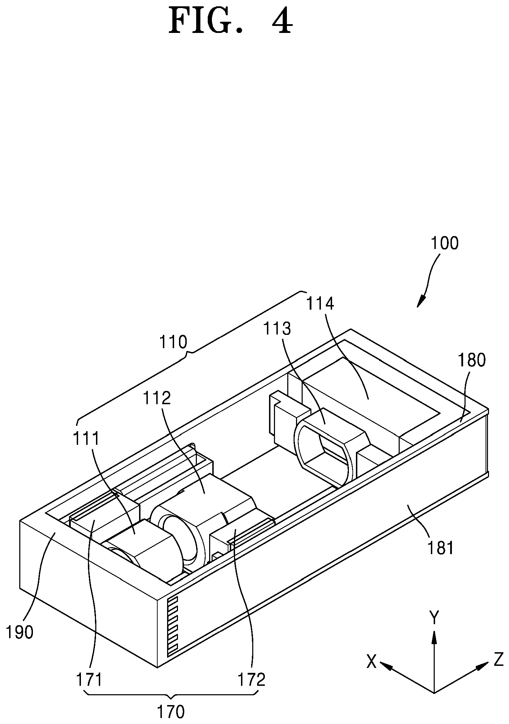

FIG. 3 is an exploded perspective view of the camera module 100 according to an embodiment, and FIG. 4 is an assembled perspective view of the camera module 100 according to an embodiment.

Referring to FIGS. 3 and 4, the camera module 100 according to an embodiment may include at least one lens assembly 110, a moving frame 170 on which the lens assembly 110 is mounted and moving the lens assembly 110 in an optical axis direction Z, and a fixed frame 180 supporting the moving frame 170 to be movable.

The lens assembly 110 may include a first lens assembly 111 and a second lens assembly 112. The lens assembly 110 may include at least one lens and a barrel supporting the at least one lens. The lens assembly 110 may further include a third lens assembly 113 and a prism 114, which are arranged in the optical axis direction Z.

The moving frame 170 may be driven in the optical axis direction Z. The moving frame 170 may include a first moving frame 171 and a second moving frame 172, which are movable in the optical axis direction Z. The first moving frame 171 may be mounted with the first lens assembly 111 and move in the optical axis direction Z. The second moving frame 172 may be mounted with the second lens assembly 112 and move in the optical axis direction Z.

A guide ball 175 for guiding movement of the moving frame 170 may be provided between the moving frame 170 and the fixed frame 180.

A zoom-in/zoom-out function may be performed or an auto focus function of automatically adjusting a focus may be performed through movement of the moving frame 170 in the optical axis direction Z.

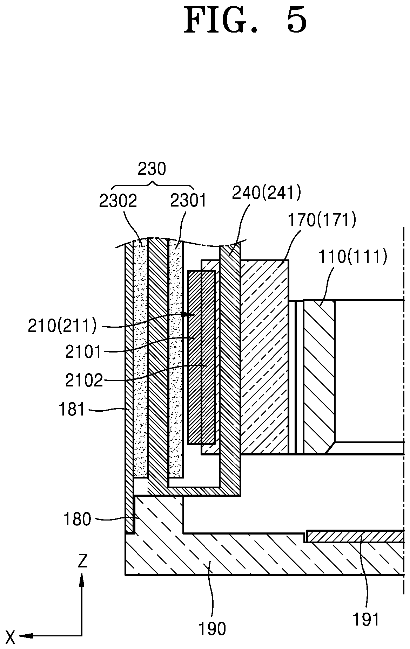

An image sensor 191 (see FIG. 5) may be provided at a base 190. The base 190 may be arranged below the fixed frame 180 and the image sensor 191 may be provided at a center portion. The lens assembly 110 may be spaced apart from the image sensor 191 in the optical axis direction Z.

The fixed frame 180 is fixed to the base 190. The fixed frame 180 may be modified to any shape as long as the moving frame 170 is movably supported. Here, the fixed frame 180 being fixed to the base 190 denotes that relative positions of the fixed frame 180 and the base 190 are not changed, and includes all of a structure in which the fixed frame 180 is directly fixed to the base 190, a structure in which the fixed frame 180 is integrated to the base 190, and a structure in which the fixed frame 180 is indirectly fixed to the base 190 through another member.

The moving frame 170 and the fixed frame 180 includes the driving module 200 for moving the moving frame 170 in the optical axis direction Z.

The driving module 200 may include a first driving module 201 for moving the first moving frame 171 in the optical axis direction Z, and a second driving module 202 for moving the second moving frame 172 in the optical axis direction Z.

The first driving module 201 may include a first magnet 211 arranged at the first moving frame 171, and a first coil 231 and a first magnetic field blocking unit 241, which are arranged at the fixed frame 180. The first coil 231 is arranged to face the first magnet 211. At least a portion of the first magnetic field blocking unit 241 is arranged at a center portion of the first coil 231.

The second driving module 202 may include a second magnet 212 arranged at the second moving frame 172, and a second coil 232 and a second magnetic field blocking unit 242, which are arranged at the fixed frame 180. The second coil 232 may be arranged to face the second magnet 212. At least a portion of the second magnetic field blocking unit 242 is arranged at a center portion of the second coil 232.

The fixed frame 180 may include a printed circuit board 181 connected to the first coil 231 and the second coil 232. The printed circuit board 181 may be a flexible printed circuit board, but is not necessarily limited thereto.

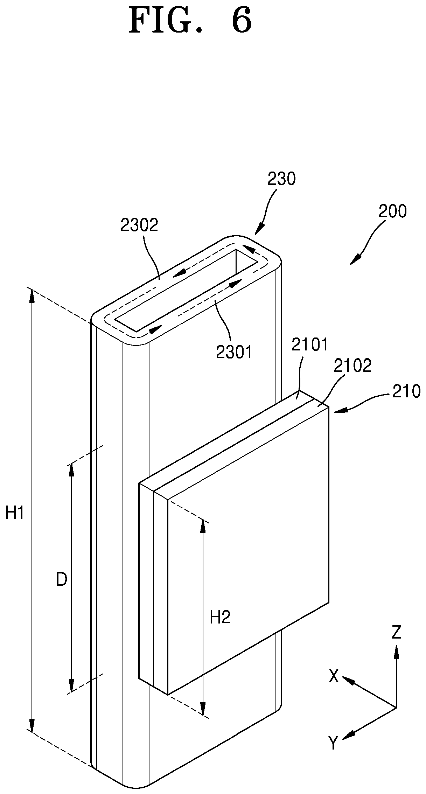

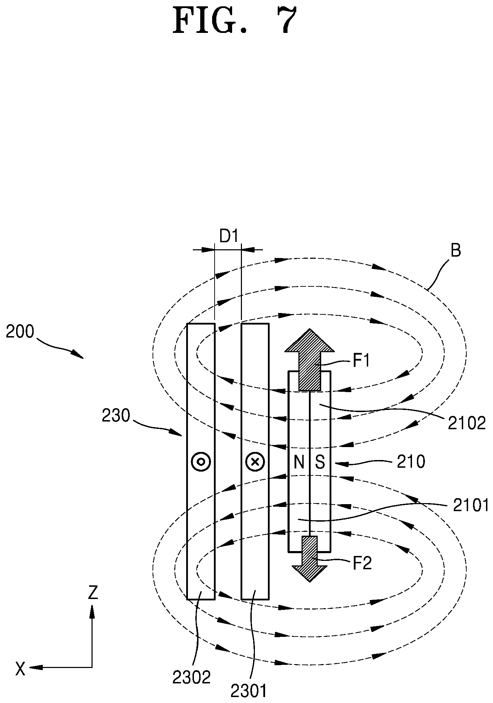

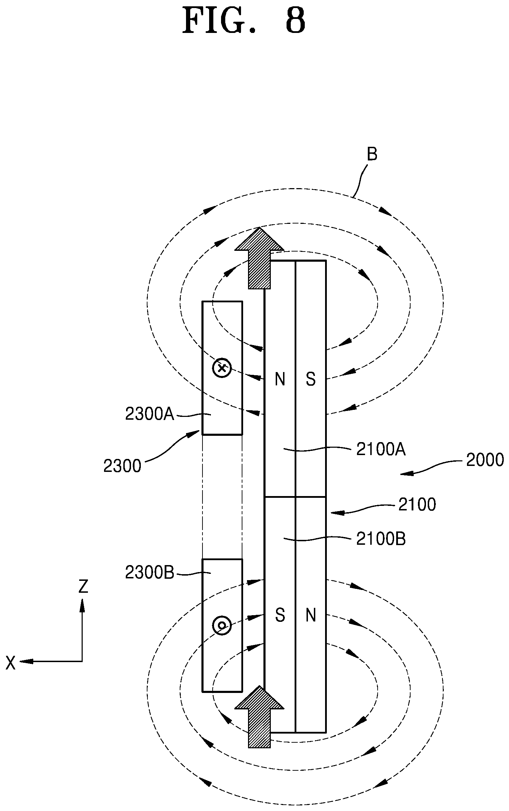

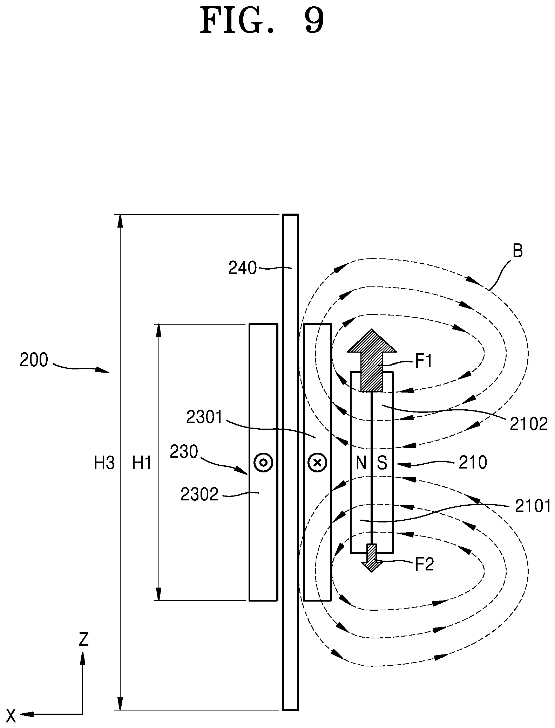

FIG. 5 is a diagram showing an example of a cross section of the camera module 100, according to an embodiment. FIG. 6 is a diagram for describing examples of a magnet 210 and a coil 230 of the driving module 200, according to an embodiment. FIGS. 7 and 9 are diagrams for describing operations of the driving module 200, according to embodiments, and FIG. 8 is a diagram for describing an operation of the camera module 100, according to a comparative example.

Referring to FIGS. 5 and 6, the moving frame 170 includes the magnet 210 having an N pole 2101 and an S pole 2102 arranged in a first direction X perpendicular to the optical axis direction Z. In the drawings, the N pole 2101 is illustrated to be adjacent to the coil 230, but is not limited thereto, and the S pole 2102 may be adjacent to the coil 230 as occasion demands.

The fixed frame 180 includes the coil 230 spaced apart from the magnet 210 in the first direction X, and a magnetic field blocking unit 240 arranged at a center portion of the coil 230.

The coil 230 is wound around a rotating axis parallel to the optical axis direction Z, and has a certain height H1 in the optical axis direction Z. The height H1 of the coil 230 in the optical axis direction Z is greater than a height H2 of the magnet 210 in the optical axis direction Z.

The height H1 of the coil 230 in the optical axis direction Z may be equal to or greater than a sum of the height H2 of the magnet 210 in the optical axis direction Z and a distance D of the magnet 210 movable in the optical axis direction Z. The magnet 210 is provided at the moving frame 170, and thus, the distance D of the magnet 210 movable in the optical axis direction Z may be equal to a distance of the moving frame 170 movable in the optical axis direction Z, for example, a stroke distance.

Referring to FIGS. 6 and 7, the coil 230 may include a first region 2301 arranged to be adjacent to the magnet 210, and a second region 2302 arranged to be far from the magnet 210 than the first region 2301.

When a current is applied to the coil 230, the magnet 210 moves backward or forward in the optical axis direction Z while maintaining a certain distance from the coil 230 in the first direction X.

For example, when the current is applied to the coil 230 in a counterclockwise direction, the current flows through the first region 2301 of the coil 230 in a direction into the ground and the current flows through the second region 2302 of the coil 230 in a direction out from the ground. A first force F1 of moving upward in the optical axis direction Z is applied to the magnet 210, by a direction of a magnetic field B formed by the magnet 210 and the direction of the current flowing through the first region 2301 of the coil 230. A second force F2 of moving downward in the optical axis direction Z is applied to the magnet 210, because the direction of the current flowing through the second region 2302 of the coil 230 is opposite to the direction of the current flowing through the first region 2301.

The second region 2302 of the coil 230 is arranged far from the magnet 210 than the first region 2301 of the coil 230, and thus, the first force F1 applied by the first region 2301 of the coil 230 is relatively great in the magnet 210 compared to the second force F2 applied by the second region 2302 of the coil 230. In other words, a distance between the first region 2301 of the coil 230 and the magnet 210 is less than a distance between the second region 2302 of the coil 230 and the magnet 210, and thus, the first force F1 applied by the first region 2301 of the coil 230 is predominant in the magnet 210 and accordingly, the magnet 210 moves in a direction of the first force F1.

When a coil 2300 is wound in the first direction X perpendicular to the optical axis direction Z as shown in FIG. 8, currents flow in opposite directions in an upper region 2300A and a lower region 2300B of the coil 2300, and accordingly, a magnet 2100 is arranged such that a polarity of an upper magnet 2100A facing the upper region 2300A of the coil 2300 and a polarity of a lower magnet 2100B facing the lower region 2300B of the coil 2300 are different from each other. In a driving module 2000 having such a structure, the magnet 2100 is moved while the upper magnet 2100A is within a range that does not overlap the lower region 2300B of the coil 2300 and the lower magnet 2100B is within a range that does not overlap the upper region 2300A of the coil 2300. In such a structure, in order to secure a moving distance of the magnet 2100, a height of the magnet 2100 in the optical axis direction Z needs to be increased to be two times or greater than a moving distance of the magnet 2100. Also, in order to increase the moving distance of the magnet 2100, the number of magnets 2100 and the number of coils 2300 corresponding to the magnets 2100 need to be increased. In this case, not only the number of components is increased, but also movement control of the magnet 2100 may become complicated.

On the other hand, in the driving module 200 according to an embodiment, the first region 2301 and the second region 2302 of the coil 230 are arranged in the first direction X as shown in FIG. 7, and thus, the current flows through the first region 2301 of the coil 230 facing the magnet 210 in one direction. Accordingly, it is not required to make polarities of an upper portion and a lower portion of the magnet 210 to be different from each other. Thus, a height of the magnet 210 in the optical axis direction Z may be designed regardless of a moving distance of the magnet 210. Also, the length H1 of the coil 230 is increased in the optical axis direction Z to increase the moving distance D of the magnet 210, and thus, the number of components may be reduced, for example, an increase in the number of magnets 210 may be minimized, and movement control of the magnet 210 may be simplified.

However, when a distance D1 between the first region 2301 and the second region 2302 of the coil 230 is small, for example, when the distance D1 between the first region 2301 and the second region 2302 is 1.5 mm or less, a difference between the first force F1 and the second force F2 caused by a distance difference may not be great. In this case, force moving the magnet 210 may not be sufficient enough for a performance required in the camera module 100.

Taking this into consideration, the camera module 100 according to an embodiment may include a configuration for maximizing an effect according to the first region 2301 of the coil 230. For example, referring to FIG. 9, the camera module 100 may include the magnetic field blocking unit 240 arranged at the center portion of the coil 230.

The first region 2301 of the coil 230 is arranged between the magnetic field blocking unit 240 and the magnet 210, and the second region 2302 is arranged to face the first region 2301 with the magnetic field blocking unit 240 therebetween. The magnetic field blocking unit 240 is arranged between the first region 2301 and the second region 2302.

When the magnetic field blocking unit 240 is arranged between the first region 2301 and the second region 2302 of the coil 230, the magnetic field B of the magnet 210 is concentrated near the first region 2301 of the coil 230, and the magnetic field B reaching the second region 2302 of the coil 230 may be blocked or minimized. Accordingly, the second force F2 applied to the magnet 210 may be removed or minimized by the current flowing through the second region 2302 of the coil 230. Thus, the first force F1 applied to the magnet 210 by the current flowing through the first region 2301 of the coil 230 may be used to move the magnet 210 without being offset by another force. In the driving module 200 where the magnetic field blocking unit 240 is arranged, force moving the magnet 210 may satisfy a performance required in the camera module 100.

The magnetic field blocking unit 240 may be a ferromagnetic body. For example, stainless steel may be used as a material of the magnetic field blocking unit 240, but the material is not limited thereto and may vary as long as a magnetic field is blocked.

The magnetic field blocking unit 240 may have a certain height H3 in the optical axis direction Z so as to prevent the magnetic field B formed by the magnet 210 from reaching the second region 2302 of the coil 230. For example, the height H3 of the magnetic field blocking unit 240 in the optical axis direction Z is greater than the height H2 of the coil 230 in the optical axis direction Z.

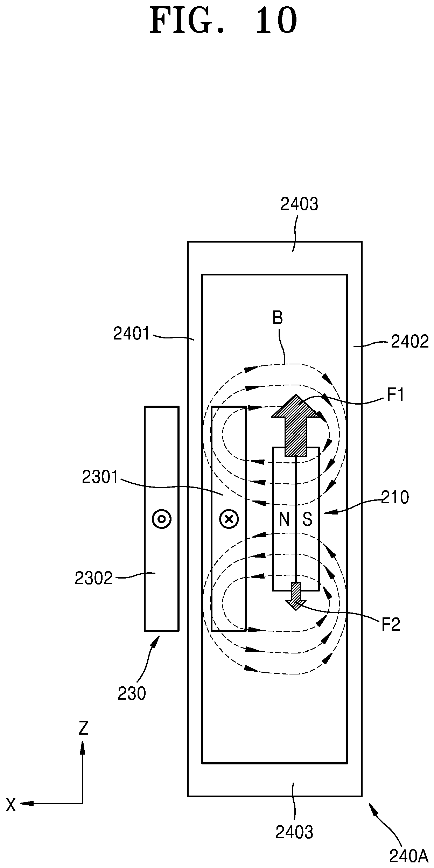

FIGS. 10 to 12 are diagrams for describing magnetic field blocking units 240A, 240B, and 240C according to different embodiments. Referring to FIG. 10, the magnetic field blocking unit 240A according to an embodiment may include a first magnetic field blocking region 2401 arranged between the first region 2301 and the second region 2302, a second magnetic field blocking region 2402 parallel to the first magnetic field blocking region 2401, and a third magnetic field blocking region 2403 connecting the first and second magnetic field blocking regions 2401 and 2402 to each other.

The second magnetic field blocking region 2402 is arranged closer to the magnet 210 than the first region 2301. The second magnetic field blocking region 2402 is arranged such that the magnet 210 and the first region 2301 of the coil 230 are located between the second magnetic field blocking region 2402 and the first magnetic field blocking region 2401.

The third magnetic field blocking region 2403 connects end portions of the first and second magnetic field blocking regions 2401 and 2402 to each other, and the other third magnetic field blocking region 2403 connects other end portions of the first and second magnetic field blocking regions 2401 and 2402 to each other.

The magnetic field blocking unit 240A may concentrate the magnetic field B of the magnet 210 in the first region 2301 of the coil 230, through a structure of surrounding the magnet 210 and the first region 2301 of the coil 230. Accordingly, an effect of another force excluding the first force F1 applied between the magnet 210 and the first region 2301 of the coil 230 may be minimized. In other words, the first force F1 applied to the magnet 210 by the current flowing through the first region 2301 of the coil 230 may be used to move the magnet 210 without being offset by another force. Thus, the force for moving the magnet 210 may be increased.

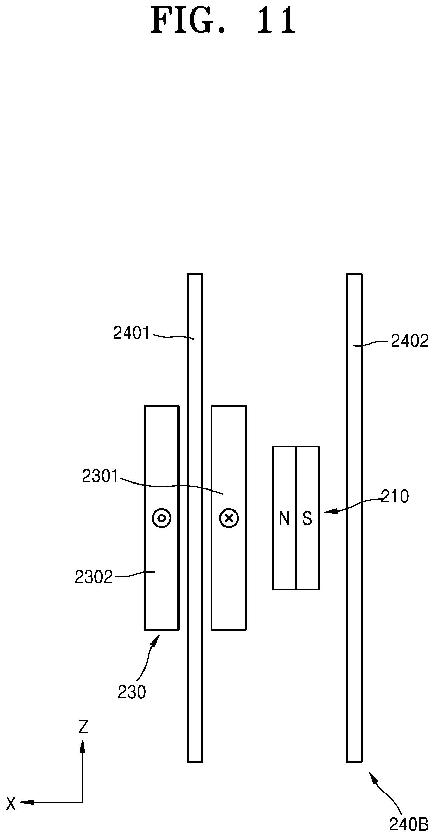

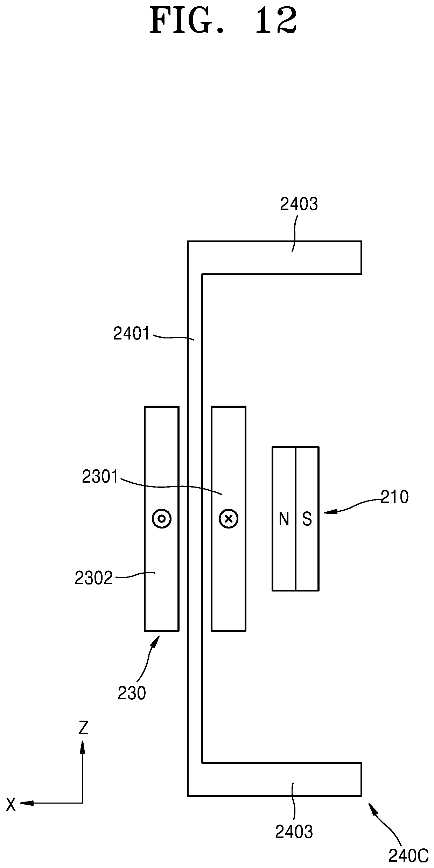

A shape of the magnetic field blocking unit 240A is not necessarily limited thereto, and the magnetic field blocking unit 240A may be variously modified as long as the magnetic field B of the magnet 210 is concentrated in the first region 2301 of the coil 230. For example, the magnetic field blocking units 240B and 240C may include the first magnetic field blocking region 2401 and the second magnetic field blocking region 2402 without the third magnetic field blocking region 2403 as shown in FIG. 11, or may include the first magnetic field blocking region 2401 and the third magnetic field blocking region 2403 without the second magnetic field blocking region 2402 as shown in FIG. 12.

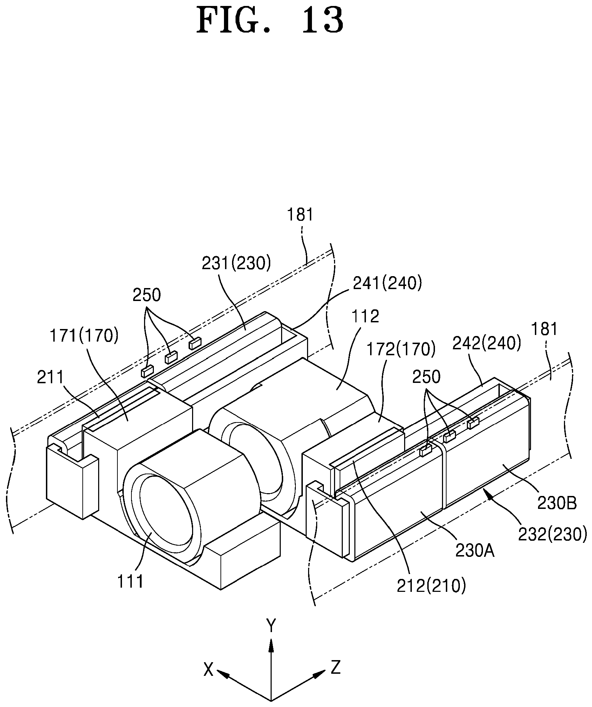

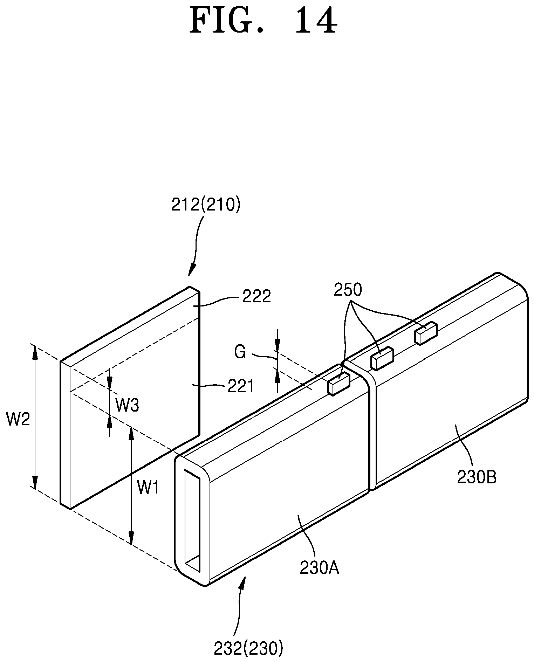

Referring to FIGS. 13 and 14, the camera module 100 according to an embodiment may include a position sensor 250 for detecting position movement of the moving frame 170. The position sensor 250 may be a magnetic sensor. For example, the position sensor 250 may be hall sensor.

Because the coil 230 is wound around the rotating axis parallel to the optical axis direction Z, the position sensor 250 is arranged adjacent to the coil 230 and is not arranged at the center portion of the coil 230. For example, the position sensor 250 may be arranged at the fixed frame 180 to be adjacent to one side of the coil 230. The position sensor 250 may be arranged on the printed circuit board 181 of the fixed frame 180. When there are a plurality of the position sensors 250, the plurality of position sensors 250 may be arranged along a moving direction of the magnet 210. The plurality of position sensors 250 may be arranged to overlap a moving path of the magnet 210.

The magnet 210 may include an extending portion 222 extending to face the position sensor 250. For example, the extending portion 222 may be integrated with a driving portion 221 of the magnet 210 facing the coil 230.

A width W3 of the extending portion 222 may be equal to or greater than a distance G between the coil 230 and the position sensor 250. The width W3 of the extending portion 222 may be less than or equal to two times the distance G between the coil 230 and the position sensor 250. Here, a width is a width in a second direction Y perpendicular to the optical axis direction Z and the first direction X.

A width W2 of the magnet 210 including the extending portion 222 is greater than a width W1 of the coil 230. The width W2 of the magnet 210 may be greater than a sum of the width W1 of the coil 230 and the distance G between the position sensor 250 and the coil 230. However, the width W2 of the magnet 210 may be less than or equal to the two times the width W1 of the coil 230.

The position sensor 250 may detect position movement of the moving frame 170 by detecting movement of the extending portion 222 of the magnet 210.

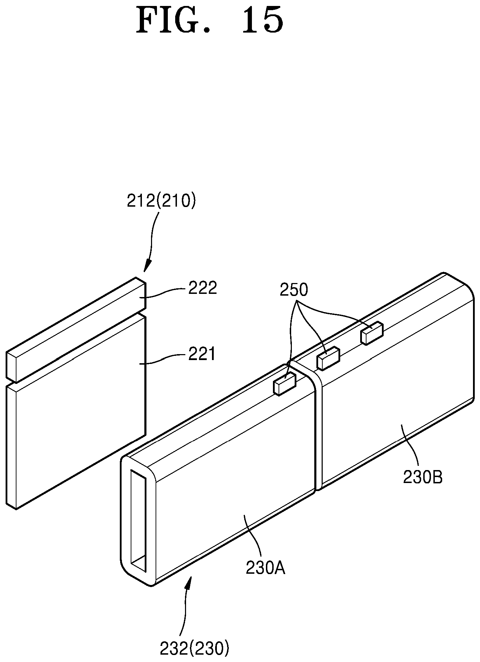

In the embodiment described above, the extending portion 222 is integrated with the driving portion 221 of the magnet 210, but an embodiment is not necessarily limited thereto. For example, as shown in FIG. 15, the extending portion 222 may be separated from the driving portion 221 of the magnet 210. When the extending portion 222 is separated, the extending portion 222 may be arranged adjacent to the magnet 210, but an embodiment is not necessarily limited thereto, and the extending portion 222 may be arranged far from the magnet 210 according to an installation position of the position sensor 250.

Referring back to FIGS. 13 and 14, the coil 230 may be divided in the optical axis direction Z. For example, the coil 230 may include a first sub-coil 230A and a second sub-coil 230B arranged in the optical axis direction Z.

The first sub-coil 230A and the second sub-coil 230B may surround one magnetic field blocking unit 240. As such, by dividing the coil 230 into the first sub-coil 230A and the second sub-coil 230B, convenience of winding while forming the coil 230 may be increased.

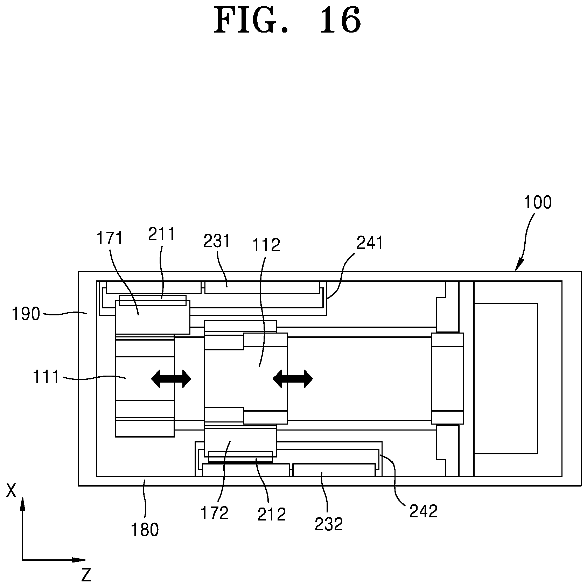

FIG. 16 is a diagram for describing an operation of the camera module 100, according to an embodiment. Referring to FIG. 16, movement of the first magnet 211 and the first moving frame 171 in the optical axis direction Z may be controlled by controlling the current flowing through the first region 2301 of the first coil 231. Movement of the second magnet 212 and the second moving frame 172 in the optical axis direction Z may be controlled by controlling the current flowing through the first region 2301 of the second coil 232.

The first coil 231 and the second coil 232 may be arranged to overlap each other in the first direction X perpendicular to the optical axis direction Z. By arranging the first coil 231 and the second coil 232 to overlap each other, a length of the camera module 100 in the optical axis direction Z may be minimized while independently driving the plurality of lens assemblies 110. The camera module 100 according to an embodiment may control voltages applied to the first coil 231 and the second coil 232, thereby performing a wide-angle function, a telephoto function, or an auto focus function.

For understanding of the present disclosure, reference signs are used in embodiments shown in the drawings, and specific terms are used to describe the embodiments, but the present disclosure is not limited by the specific terms and the present disclosure may include all components that may be commonly conceived by one of ordinary skill in the art.

The terms such as "mechanism", "element", "means", and "configuration" may be used widely and are not limited as mechanical and physical configurations. The terms may include a meaning of a series of routines of software in association with a processor or the like.

Certain executions described in the present disclosure are embodiments and do not limit the scope of the present disclosure in any way. For brevity of the specification, general electronic configurations, control systems, software, and other functional aspects of systems may be omitted. In addition, connection or connection members of lines between components shown in the drawings exemplarily represent functional connections and/or physical or circuit connections, and in an actual apparatus, may be replaced or may be implemented as various additional functional connections, physical connections, or circuit connections. Also, elements described herein may not be essential elements for application of the present disclosure unless the elements are particularly described as being "essential" or "critical". The expressions "including", "having", and the like used herein are used to be understood as terms of open termination of technology.

The term "the" and similar referential terms in the specification (specifically in the claims) of the present disclosure may be used for both the singular and the plural. Further, when a range is described in the present disclosure, the present disclosure includes inventions to which individual values belonging to the range are applied (unless otherwise stated), and it is considered that each individual value configuring the range is described in the detailed description of the present disclosure. Lastly, unless an order is clearly stated or unless otherwise stated, operations configuring a method according to the present disclosure may be performed in an appropriate order. The present disclosure is not necessarily limited by an order the operations are described. In the present disclosure, the use of all examples or exemplary terms (for example, "etc.") is merely for describing the present disclosure in detail and the scope of the present disclosure is not limited by those examples or exemplary terms unless defined in the claims.

## Claims

1. A camera module comprising:
at least one lens assembly;
a moving frame mounted with the at least one lens assembly, moving the at least one lens assembly in an optical axis direction, and including a magnet having an N pole and an S pole arranged in a first direction perpendicular to the optical axis direction; and
a fixed frame supporting the moving frame to be movable along the optical axis direction, and including a coil and a magnetic field blocking unit, the coil being spaced apart from the magnet in the first direction **characterized by** the magnetic field blocking unit being arranged at a center portion of the coil and extending in the optical axis direction,
wherein the coil includes a first region provided between the magnetic field blocking unit and the magnet, and a second region provided to face the first region with the magnetic field blocking unit therebetween, and
a moving direction of the moving frame varies along the optical axis direction, depending on a direction of a current applied to the first region of the coil.

2. The camera module of claim 1, wherein a magnitude of a first force applied to the magnet by a current flowing through the first region is greater than a magnitude of a second force applied to the magnet by a current flowing through the second region.

3. The camera module of any one of the preceding claims, wherein a height of the coil in the optical axis direction is greater than a height of the magnet in the optical axis direction.

4. The camera module of claim 3, wherein the height of the coil in the optical axis direction is equal to or greater than a sum of a movable distance of the moving frame in the optical axis direction and the height of the magnet in the optical axis direction.

5. The camera module of any one of the preceding claims, wherein a height of the magnetic field blocking unit in the optical axis direction is greater than a height of the coil in the optical axis direction.

6. The camera module of anyone of the preceding claims, wherein the magnetic field blocking unit comprises:
a first magnetic field blocking region provided between the first region and the second region, and extending in the optical axis direction; and
a second magnetic field blocking region parallel to the first magnetic field blocking region and arranged such that the first region and the magnet are located between the first magnetic field blocking region and the second magnetic field blocking region.

7. The camera module of claim 6, wherein the magnetic field blocking unit further comprises a third blocking region connecting the first magnetic field blocking region and the second magnetic field blocking region to each other.

8. The camera module of anyone of the preceding claims, further comprising a position sensor configured to detect position movement of the moving frame,
wherein the magnet includes an extending portion extended to face the position sensor, and
the position sensor is configured to detect movement of the moving frame by detecting movement of the extending portion.

9. The camera module of claim 8, wherein a width of the magnet in a second direction perpendicular to both the optical axis direction and the first direction is greater than a width of the coil in the second direction.

10. The camera module of anyone of claims 8 and 9, wherein there is a plurality of the position sensors, and
the plurality of position sensors are arranged along the optical axis direction.

11. The camera module of anyone of the preceding claims, wherein the coil comprises a first sub-coil and a second sub-coil, which are arranged in the optical axis direction.

12. The camera module of anyone of the preceding claims, wherein the at least one lens assembly comprises a first lens assembly and a second lens assembly,
the moving frame comprises a first moving frame and a second moving frame, the first moving frame being mounted with the first lens assembly and movable in the optical axis direction, and the second moving frame being mounted with the second lens assembly spaced apart from the first lens assembly in the optical axis direction and movable along the optical axis direction, and
the magnet comprises a first magnet arranged in the first moving frame and a second magnet arranged in the second moving frame.

13. The camera module of claim 12, wherein the fixed frame comprises a first coil arranged to face the first magnet and a second coil arranged to face the second magnet, and
the magnetic field blocking unit comprises a first magnetic field blocking unit arranged at a center portion of the first coil and a second magnetic field blocking unit arranged at a center portion of the second coil.

14. The camera module of claim 13, wherein the first coil and the second coil are arranged to at least partially overlap each other in the first direction perpendicular to the optical axis direction.

15. An electronic apparatus comprising a camera module, wherein the camera module comprises:
at least one lens assembly;
a moving frame mounted with the at least one lens assembly, moving the at least one lens assembly in an optical axis direction, and including a magnet having an N pole and an S pole arranged in a first direction perpendicular to the optical axis direction; and
a fixed frame supporting the moving frame to be movable in the optical axis direction, and including a coil and a magnetic field blocking unit, the coil being spaced apart from the magnet in the first direction and the magnetic field blocking unit being arranged at a center portion of the coil and extending in the optical axis direction,
wherein the coil includes a first region provided between the magnetic field blocking unit and the magnet, and a second region provided to face the first region with the magnetic field blocking unit therebetween, and
a moving direction of the moving frame varies along the optical axis direction depending on a direction of a current applied to the first region of the coil.

## Patentansprüche

1. Kameramodul, das Folgendes umfasst:
mindestens eine Linsenanordnung;
einen beweglichen Rahmen, an dem die mindestens eine Linsenanordnung montiert ist, der die mindestens eine Linsenanordnung in Richtung einer optischen Achse bewegt und einen Magneten mit einem N-Pol und einem S-Pol enthält, die in einer ersten Richtung senkrecht zu der Richtung der optischen Achse angeordnet sind; und
einen festen Rahmen, der den beweglichen Rahmen so stützt, dass er entlang der Richtung der optischen Achse beweglich ist, und der eine Spule und eine Magnetfeld-Blockierungseinheit enthält, wobei die Spule in der ersten Richtung von dem Magneten beabstandet ist, **dadurch gekennzeichnet, dass** die Magnetfeld-Blockierungseinheit an einem Mittelabschnitt der Spule angeordnet ist und sich in Richtung der optischen Achse erstreckt,
wobei die Spule einen ersten Bereich, der zwischen der Magnetfeld-Blockierungseinheit und dem Magneten vorgesehen ist, und einen zweiten Bereich enthält, der so vorgesehen ist, dass er dem ersten Bereich zugewandt ist, wobei sich die Magnetfeld-Blockierungseinheit dazwischen befindet, und
eine Bewegungsrichtung des beweglichen Rahmens entlang der Richtung der optischen Achse abhängig von einer Richtung eines an den ersten Bereich der Spule angelegten Stroms variiert.

2. Kameramodul nach Anspruch 1, wobei eine Größe einer ersten Kraft, die durch einen durch den ersten Bereich fließenden Strom auf den Magneten ausgeübt wird, größer als eine Größe einer zweiten Kraft ist, die durch einen durch den zweiten Bereich fließenden Strom auf den Magneten ausgeübt wird.

3. Kameramodul nach einem der vorhergehenden Ansprüche, wobei eine Höhe der Spule in Richtung der optischen Achse größer als eine Höhe des Magneten in Richtung der optischen Achse ist.

4. Kameramodul nach Anspruch 3, wobei die Höhe der Spule in Richtung der optischen Achse gleich oder größer als eine Summe aus einer beweglichen Entfernung des beweglichen Rahmens in Richtung der optischen Achse und der Höhe des Magneten in Richtung der optischen Achse ist.

5. Kameramodul nach einem der vorhergehenden Ansprüche, wobei eine Höhe der Magnetfeld-Blockierungseinheit in Richtung der optischen Achse größer als eine Höhe der Spule in Richtung der optischen Achse ist.

6. Kameramodul nach einem der vorhergehenden Ansprüche, wobei die Magnetfeld-Blockierungseinheit Folgendes umfasst:
einen ersten Magnetfeld-Blockierungsbereich, der zwischen dem ersten Bereich und dem zweiten Bereich vorgesehen ist und sich in Richtung der optischen Achse erstreckt; und
einen zweiten Magnetfeld-Blockierungsbereich, der parallel zu dem ersten Magnetfeld-Blockierungsbereich verläuft und so angeordnet ist, dass sich der erste Bereich und der Magnet zwischen dem ersten Magnetfeld-Blockierungsbereich und dem zweiten Magnetfeld-Blockierungsbereich befinden.

7. Kameramodul nach Anspruch 6, wobei die Magnetfeld-Blockierungseinheit ferner einen dritten Blockierungsbereich umfasst, der den ersten Magnetfeld-Blockierungsbereich und den zweiten Magnetfeld-Blockierungsbereich miteinander verbindet.

8. Kameramodul nach einem der vorhergehenden Ansprüche, das ferner einen Positionssensor umfasst, der so konfiguriert ist, dass er die Positionsbewegung des beweglichen Rahmens erkennt,
wobei der Magnet einen verlängerten Abschnitt enthält, der so verlängert ist, dass er dem Positionssensor zugewandt ist, und
der Positionssensor so konfiguriert ist, dass er die Bewegung des beweglichen Rahmens durch Erkennen der Bewegung des verlängerten Abschnitts erkennt.

9. Kameramodul nach Anspruch 8, wobei eine Breite des Magneten in einer zweiten Richtung senkrecht sowohl zu der Richtung der optischen Achse als auch zu der ersten Richtung größer als eine Breite der Spule in der zweiten Richtung ist.

10. Kameramodul nach einem der Ansprüche 8 und 9, wobei es eine Vielzahl der Positionssensoren gibt, und
die Vielzahl von Positionssensoren entlang der Richtung der optischen Achse angeordnet sind.

11. Kameramodul nach einem der vorhergehenden Ansprüche, wobei die Spule eine erste Unterspule und eine zweite Unterspule umfasst, die in Richtung der optischen Achse angeordnet sind.

12. Kameramodul nach einem der vorhergehenden Ansprüche, wobei die mindestens eine Linsenanordnung eine erste Linsenanordnung und eine zweite Linsenanordnung umfasst,
der bewegliche Rahmen einen ersten beweglichen Rahmen und einen zweiten beweglichen Rahmen umfasst, wobei der erste bewegliche Rahmen an der ersten Linsenanordnung montiert ist und in Richtung der optischen Achse beweglich ist und der zweite bewegliche Rahmen an der zweiten Linsenanordnung montiert ist, die in Richtung der optischen Achse von der ersten Linsenanordnung beabstandet ist und entlang der Richtung der optischen Achse beweglich ist, und
der Magnet einen ersten Magneten, der in dem ersten beweglichen Rahmen angeordnet ist, und einen zweiten Magneten umfasst, der in dem zweiten beweglichen Rahmen angeordnet ist.

13. Kameramodul nach Anspruch 12, wobei der feste Rahmen eine erste Spule, die so angeordnet ist, dass sie dem ersten Magneten zugewandt ist, und eine zweite Spule umfasst, die so angeordnet ist, dass sie dem zweiten Magneten zugewandt ist, und
die Magnetfeld-Blockierungseinheit eine erste Magnetfeld-Blockierungseinheit, die an einem Mittelabschnitt der ersten Spule angeordnet ist, und eine zweite Magnetfeld-Blockierungseinheit umfasst, die an einem Mittelabschnitt der zweiten Spule angeordnet ist.

14. Kameramodul nach Anspruch 13, wobei die erste Spule und die zweite Spule so angeordnet sind, dass sie sich in der ersten Richtung senkrecht zu der Richtung der optischen Achse zumindest teilweise überlappen.

15. Elektronische Vorrichtung, die ein Kameramodul umfasst, wobei das Kameramodul Folgendes umfasst:
mindestens eine Linsenanordnung;
einen beweglichen Rahmen, an dem die mindestens eine Linsenanordnung montiert ist, der die mindestens eine Linsenanordnung in Richtung der optischen Achse bewegt und einen Magneten mit einem N-Pol und einem S-Pol enthält, die in einer ersten Richtung senkrecht zu der Richtung der optischen Achse angeordnet sind; und
einen festen Rahmen, der den beweglichen Rahmen so stützt, dass er in Richtung der optischen Achse beweglich ist, und der eine Spule und eine Magnetfeld-Blockierungseinheit enthält, wobei die Spule in der ersten Richtung von dem Magneten beabstandet ist und die Magnetfeld-Blockierungseinheit an einem Mittelabschnitt der Spule angeordnet ist und sich in Richtung der optischen Achse erstreckt,
wobei die Spule einen ersten Bereich, der zwischen der Magnetfeld-Blockierungseinheit und dem Magneten vorgesehen ist, und einen zweiten Bereich enthält, der so vorgesehen ist, dass er dem ersten Bereich zugewandt ist, wobei sich die Magnetfeld-Blockierungseinheit dazwischen befindet, und
eine Bewegungsrichtung des beweglichen Rahmens entlang der Richtung der optischen Achse abhängig von einer Richtung eines an den ersten Bereich der Spule angelegten Stroms variiert.

## Revendications

1. Module de caméra comprenant :
au moins un ensemble de lentilles ;
un cadre mobile monté avec l'au moins un ensemble de lentilles, déplaçant l'au moins un ensemble de lentilles dans une direction d'axe optique, et incluant un aimant ayant un pôle N et un pôle S disposé dans une première direction perpendiculaire à la direction d'axe optique ; et
un cadre fixe supportant le cadre mobile de manière à ce qu'il puisse être mobile le long de la direction d'axe optique, et incluant une bobine et une unité de blocage de champ magnétique, la bobine étant espacée de l'aimant dans la première direction **caractérisé en ce que** l'unité de blocage de champ magnétique est disposée dans une partie centrale de la bobine et s'étend dans la direction d'axe optique,
où la bobine inclut une première région prévue entre l'unité de blocage de champ magnétique et l'aimant, et une deuxième région prévue pour faire face à la première région avec l'unité de blocage de champ magnétique située entre celles-ci, et
une direction de déplacement du cadre mobile varie le long de la direction d'axe optique, en fonction d'une direction d'un courant appliqué à la première région de la bobine.

2. Module de caméra selon la revendication 1, où l'intensité d'une première force appliquée à l'aimant par un courant traversant la première région est supérieure à l'intensité d'une deuxième force appliquée à l'aimant par un courant traversant la deuxième région.

3. Module de caméra selon l'une quelconque des revendications précédentes, où la hauteur de la bobine dans la direction d'axe optique est supérieure à la hauteur de l'aimant dans la direction d'axe optique.

4. Module de caméra selon la revendication 3, où la hauteur de la bobine dans la direction d'axe optique est égale ou supérieure à la somme de la distance de déplacement du cadre mobile dans la direction d'axe optique et de la hauteur de l'aimant dans la direction d'axe optique.

5. Module de caméra selon l'une quelconque des revendications précédentes, où la hauteur de l'unité de blocage de champ magnétique dans la direction d'axe optique est supérieure à la hauteur de la bobine dans la direction d'axe optique.

6. Module de caméra selon l'une quelconque des revendications précédentes, où l'unité de blocage de champ magnétique comprend :
une première région de blocage de champ magnétique prévue entre la première région et la deuxième région, et s'étendant dans la direction d'axe optique ; et
une deuxième région de blocage de champ magnétique parallèle à la première région de blocage de champ magnétique et disposée de telle sorte que la première région et l'aimant soient situés entre la première région de blocage de champ magnétique et la deuxième région de blocage de champ magnétique.

7. Module de caméra selon la revendication 6, où l'unité de blocage de champ magnétique comprend en outre une troisième région de blocage reliant la première région de blocage de champ magnétique et la deuxième région de blocage de champ magnétique l'une à l'autre.

8. Module de caméra selon l'une quelconque des revendications précédentes, comprenant en outre un capteur de position configuré pour détecter le mouvement de position du cadre mobile,
où l'aimant inclut une partie extensible étendue pour faire face au capteur de position, et
le capteur de position est configuré pour détecter le mouvement du cadre mobile en détectant le mouvement de la partie extensible.

9. Module de caméra selon la revendication 8, où la largeur de l'aimant dans une deuxième direction perpendiculaire à la fois à la direction d'axe optique et à la première direction est supérieure à la largeur de la bobine dans la deuxième direction.

10. Module de caméra selon l'une quelconque des revendications 8 et 9, où il existe une pluralité de capteurs de position, et
la pluralité de capteurs de position est disposée le long de la direction d'axe optique.

11. Module de caméra selon l'une quelconque des revendications précédentes, où la bobine comprend une première sous-bobine et une deuxième sous-bobine, qui sont disposées dans la direction d'axe optique.

12. Module de caméra selon l'une quelconque des revendications précédentes, où l'au moins un ensemble de lentilles comprend un premier ensemble de lentilles et un deuxième ensemble de lentilles,
le cadre mobile comprend un premier cadre mobile et un deuxième cadre mobile, le premier cadre mobile étant monté avec le premier ensemble de lentilles et mobile dans la direction d'axe optique, et le deuxième cadre mobile étant monté avec le deuxième ensemble de lentilles espacé du premier ensemble de lentilles dans la direction d'axe optique et mobile le long de la direction d'axe optique, et
l'aimant comprend un premier aimant disposé dans le premier cadre mobile et un deuxième aimant disposé dans le deuxième cadre mobile.

13. Module de caméra selon la revendication 12, où le cadre fixe comprend une première bobine disposée de manière à faire face au premier aimant et une deuxième bobine disposée de manière à faire face au deuxième aimant, et
l'unité de blocage de champ magnétique comprend une première unité de blocage de champ magnétique disposée dans la partie centrale de la première bobine et une deuxième unité de blocage de champ magnétique disposée dans la partie centrale de la deuxième bobine.

14. Module de caméra selon la revendication 13, où la première bobine et la deuxième bobine sont disposées de manière à se chevaucher au moins partiellement dans la première direction perpendiculaire à la direction d'axe optique.

15. Appareil électronique comprenant un module de caméra, où le module de caméra comprend :
au moins un ensemble de lentilles ;
un cadre mobile monté avec l'au moins un ensemble de lentilles, déplaçant l'au moins un ensemble de lentilles dans une direction d'axe optique, et incluant un aimant ayant un pôle N et un pôle S disposé dans une première direction perpendiculaire à la direction d'axe optique ; et
un cadre fixe supportant le cadre mobile de manière à ce qu'il puisse être mobile dans la direction d'axe optique, et incluant une bobine et une unité de blocage de champ magnétique, la bobine étant espacée de l'aimant dans la première direction et l'unité de blocage de champ magnétique étant disposée dans la partie centrale de la bobine et s'étendant dans la direction d'axe optique,
où la bobine inclut une première région prévue entre l'unité de blocage de champ magnétique et l'aimant, et une deuxième région prévue pour faire face à la première région avec l'unité de blocage de champ magnétique située entre celles-ci, et
une direction de déplacement du cadre mobile varie le long de la direction d'axe optique, en fonction d'une direction d'un courant appliqué à la première région de la bobine.
